# EUROPEAN PATENT APPLICATION

(11) **EP 2 687 316 A2**
(43) Date of publication of application: **22.01.2014**
(21) Application number: 12460063.6
(22) Date of filing: 12.09.2012
(51) Int. Cl.: B23K 26/02

(54) **The method of manufacturing fire resistant doors made of zinc-coated profiles**

(30) Priority: 16.07.2012 PL 40000312
(71) Applicant: Jakra Corporation spólka z o.o., 05-860 Plochocin (PL)
(72) Inventor: Jablonski, Jaroslaw, 05-806 Komorow (PL); Adamiec, Janusz, 40-071 Katowice (PL)
(74) Representative: Maslowski, Andrzej

(57) **Abstract**

The subject of invention is the method of manufacturing fire resistant doors made of zinc-coated profiles.

The method according to invention is that in the process of manufacturing fire resistant doors made of zinc-coated profiles **1**, a specialized equipment is used **2** and automated welding system with option of weld cleaning and protective coating **3** application. Profiles **1** are cut on the high precision saw with the maximum tolerance of ±0.2 mm and so prepared they are positioned on a specialized table **2** which enables application of symmetrical and even force to the zinc-coated profiles connecting surfaces whose length is up to 3 m which ensures that the tolerance of connecting surfaces is below 0.1 mm. The welding is performed by means of a manipulator **3** using, depending on flat bars joined, MAG, TIG process, or plasma welding **4**, or laser welding. Plasma and laser welding is performed without additional material. The welding process is conducted from the external corner to ¼ of the joint length, and then from the internal corner to % of the joint length. The joints performed are characterized by a very narrow weld face **5,** from 1 mm to 3 mm and height exceeding the profile surface by less than 0.5 mm.

## Description

The subject of this invention is the method of manufacturing fire resistant doors made of zinc-coated profiles.

At present, profiles of fire resistant doors are manually assembled and then the profiles are welded, either by means of MIG method, i.e. in the process of welding in the shield of metal active gases with a consumable wire electrode, or by means of TIG method in the process of welding in the shield of metal inert gases with a non-consumable electrode. After being cut to the desired size, the zinc-coated profiles are manually set and adjusted in such a way that they join at the right angle. The profiles prepared in this way are welded manually. The surface of weld faces is cleaned and polished mechanically to the surface of profile. During manual welding by means of TIG or MIG method, welding non-conformances may occur which are further repaired and this may result in deformation of doors. The next stage is the application of zinc containing protective paint coating on the welded joint area.

The method of manufacturing fire resistant doors made of zinc-coated profiles according to the invention is characterized by the fact that the process of manufacturing fire resistant doors made of zinc-coated profiles is performed by means of specialized equipment and automated welding system with the option of cleaning the weld faces and application of protective coating. The zinc-coated profiles are cut on a high precision saw with the maximum tolerance of ±0.2 mm and the profiles cut in such a way are positioned on a special table which enables application symmetrical and even force to the zinc-coated profiles connecting surfaces whose length is up to 3 m which ensures that the tolerance of connecting surfaces is below 0.1 mm. This enables the use of automated welding process which, depending on flat bars joined, may be MAG, TIG process, plasma welding or laser welding. Plasma and laser welding is performed without additional material. The welding process is conducted from the external corner to ¼ of the joint length, and then from the internal corner to ¾ of the joint length. The joints performed are characterized by a very narrow weld face, from 1 mm to 3 mm and height exceeding the profile surface by less than 0.5 mm. Simultaneously to the welding process on the first welding station, on the second station the profiles which are ready for welding are assembled. When welding on the first station is completed, the automated system cleans and polishes the weld face to the profile surface. Subsequently, the equipment is changed, and then a protective zinc containing coating is applied. After the manufacturing process on the first station is completed, the automated system moves the welding head to the second station, starting the welding process. The manufacturing system may be equipped up to eight work stations.

In one version of the invention, the sections cut to the desired size are notched on the connecting tips and expanded so that the resulting flanges are characterized by the yaw angle within the range of 5° to 80° from the flat surface of the section. The sections are further automatically pressed on the specialized table creating a system of edge flanged butt weld. The welding process used to join the sections is executed by one of the following methods: TIG, MAG, laser or plasma welding, and deformations which are characteristic for these processes result in completely filled grooves. This method of manufacturing fire resistant doors made of zinc-coated profiles ensures smooth joint without any excess materials, the joint is of the section thickness, and the method does not require polishing after welding.

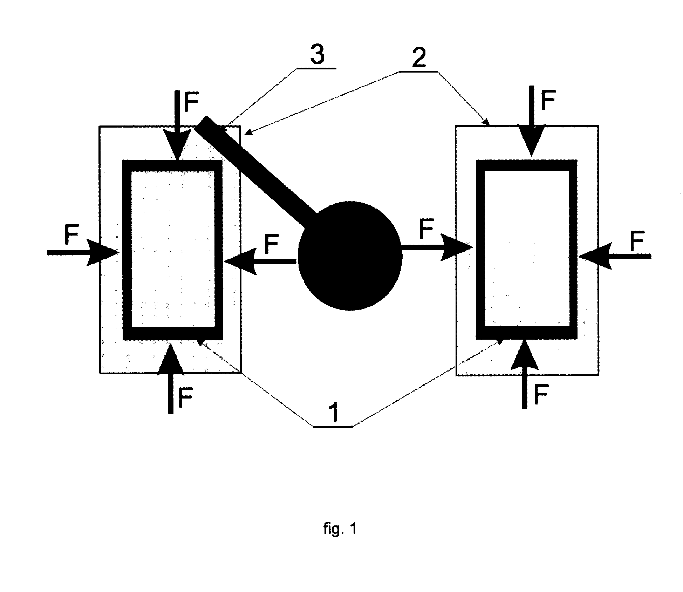

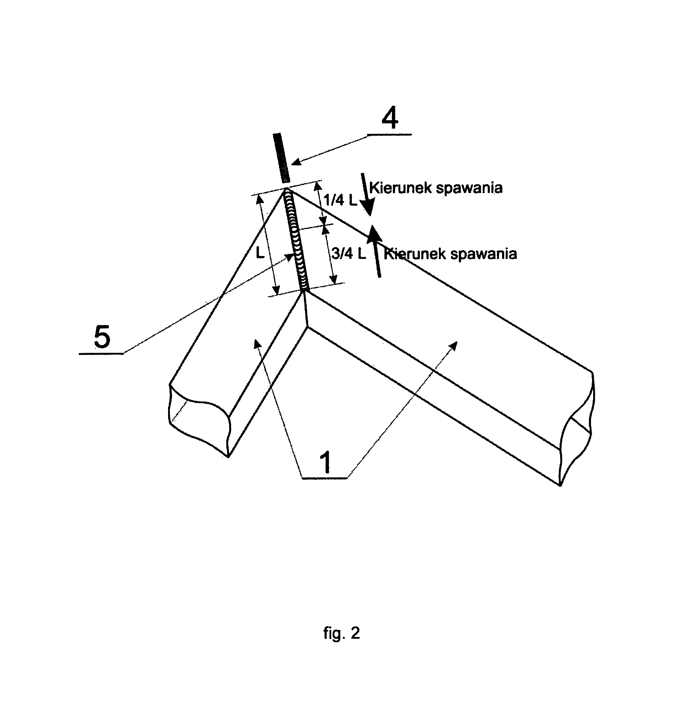

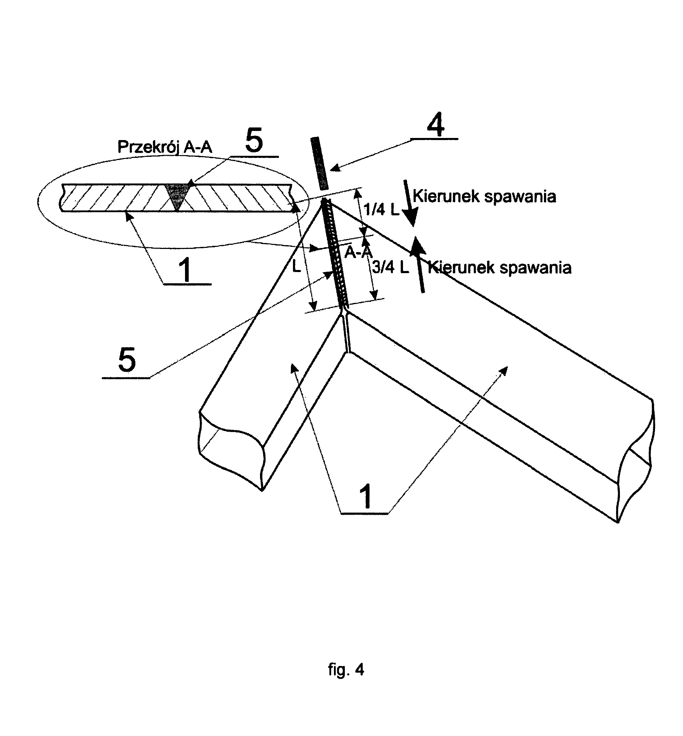

The method of manufacturing fire resistant doors made of zinc-coated profiles in the exemplary version is explained on the drawing on which fig. 1 presents the diagram of preparing the profiles for welding with even pressure of each profile, fig. 2 illustrates in detail the diagram of the joining process executed by means of plasma welding, whereas fig. 3 and fig. 4 respectively present the preparation of edge flanged butt weld and a ready edge flanged butt weld with flat weld of the section thickness.

The method of manufacturing fire resistant doors made of zinc-coated profiles according to the invention is that in the process of manufacturing fire resistant doors made of profiles **1,** a specialized equipment is used **2** and automated welding with option of weld cleaning and protective coating **3** application. Profiles **1** in S235 grade steel of square intersection 50 mm x 50 mm after cutting on the high precision saw with the maximum tolerance of ±0.2 mm are transported to the first work station and positioned on a specialized table **2** which enables application of symmetrical and even force to the zinc-coated profiles connecting surfaces whose length is up to 3 m which ensures that the tolerance of connecting surfaces is below 0.1 mm. This enables the use of automated welding process which, depending on flat bars joined, may be MAG, TIG, plasma welding **4** or laser welding. In the exemplary version, the welding process with plasma torch, which similarly to laser welding, is performed without additional material. The welding manipulator **3** was setting the plasma torch **4** at an angle of 90° in relation to the surface of profiles **1** joined. The welding process was conducted from the external corner to ¼ of the joint length (1/4L), and then from the internal corner to ¾ of the joint length (3/4L) with high welding speed of 1 m/min. The "I" joint **5** was made with flat face of "L" length, of face height below 1 mm which does not require additional polishing. Then, by means of a manipulator, a protective zinc containing coating was applied to the connecting area, in the thickness of 80 µm. Simultaneously to the welding process on the first station, on the second station next profiles are assembled and prepared for welding, and after the whole manufacturing process on the first station is completed, the manipulator **3** moves the welding head **4** to the second station starting the welding process.

The characteristic feature of manufactured doors was a proper weld with full joint penetration. The weld face **5** was flat and covered with protective zinc containing coating of 80 µm thickness.

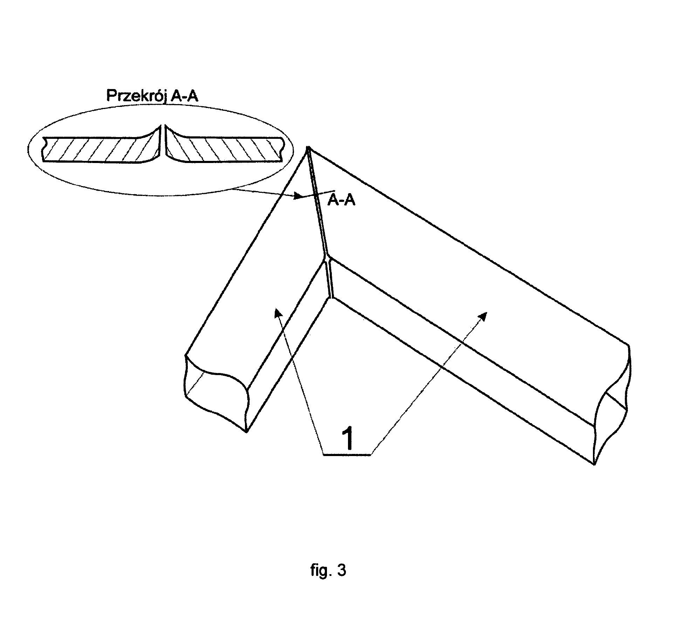

In another version of the invention the method of manufacturing fire resistant doors made of zinc-coated profiles is executed in such a way that the profiles **1** cut to the desired size are extended and notched on the tips so that flanges whose yaw angle is within the range of 5° to 80° from the flat surface of section 1 were created. The sections **1** are transported to the first work station and positioned on a specialized table **2,** creating a system of edge flanged butt weld **5** - shown on fig. 3 of the drawing. The welding process of the profiles **1** is conducted, like previously, by means of TIG, MAG process, laser or plasma welding, and deformations which are characteristic for these processes result in completely filled grooves. This method of manufacturing fire resistant doors made of zinc-coated profiles ensures smooth joint **5** without any excess materials, of the section thickness; the method does not require polishing after welding.

The described process line used for manufacturing fire resistant doors may be equipped with several work stations, favourably up to eight.

The method according to the invention enables manufacturing of fire resistant doors with high welding efficiency, without welding non-conformances, with protected joint area, with or without additional material. Fire resistant doors made of zinc-coated profiles manufactured according to this method are characterized by continuous weld of low, even face. During manufacturing only very small welding deformities occur and a narrow heat impact zone which in combination with assembly station ensures correct dimensions (no deformities of dimensions) and low weld face. The solution according to invention results in fourfold increase of manufacturing speed with simultaneous lack of additional material for welding and no necessity to polish the weld face in case of plasma or laser welding, there occur no doors deformities, there is a continuous weld on individual profile layers, and economic indexes of manufacturing increase.

## Claims

1. The method of manufacturing fire resistant doors made of zinc-coated profiles by means of specialized equipment used to stabilize and press the profiles joined with one another **characterised in that** the profiles **(1)** of square intersection after being cut to the desired size on a high precision saw with the maximum tolerance of ±0.2 mm are transported to the first work station and positioned on a specialized table **(2),** on which surfaces of the connecting profiles **(1)** are symmetrically and evenly pressed, and depending on the profiles joined **(1)** they are welded with the use of welding manipulator's arm in MAG, TIG process, plasma torch **(4)** process, or by means of high energy laser beam so that the welding manipulator **(3)** sets the torch **(4)** at the angle of 90° in relation to the surface of profiles **(1)** joined, conducting the welding process from the external corner to ¼ of the joint length (1/4L), and then from the internal corner to ¾ of the joint length (3/4L) with high welding speed of 1 m/min, and then a protective zinc containing coating is applied to the connecting area, in the thickness of 80 µm whereby simultaneously to the welding process conducted on the first station, on the second station the next profiles are assembled and prepared for welding, and after the welding process on the first station is completed, the manipulator **(3)** moves the welding head **(4)** to the second station starting the welding process on this station.

2. The method of manufacturing fire resistant doors made of zinc-coated profiles by means of specialized equipment used to stabilize and press the profiles joined with one another **characterised in that** the profiles **(1)** of square intersection after being cut to the desired size on a high precision saw with the maximum tolerance of ±0.2 mm are transported to the first work station and positioned on a specialized table **(2),** on which the profiles **(1)** are cut and extended on the connecting tips so that flanges whose yaw angle is within the range of 5° to 80° from the flat surface of section **(1)** are created, and then surfaces of the connecting profiles **(1)** are symmetrically and evenly pressed, and depending on the profiles joined **(1)** they are welded with the use of welding manipulator's arm in MAG, TIG process, plasma torch **(4)** process, or by means of high energy laser beam so that the welding manipulator **(3)** sets the torch **(4)** at the angle of 90° in relation to the surface of profiles **(1)** joined, conducting the welding process from the external corner to ¼ of the joint length (1/4L), and then from the internal corner to ¾ of the joint length (3/4L) with high welding speed of 1 m/min, and then a protective zinc containing coating is applied to the connecting area, in the thickness of 80 µm whereby simultaneously to the welding process conducted on the first station, on the second station the next profiles are assembled and prepared for welding, and after the welding process on the first station is completed, the manipulator **(3)** moves the welding head **(4)** to the second station starting the welding process on this station.
